(19) Europäisches Patentamt

European Patent Office

Office européen des brevets

(11) Publication number: **0 503 622 A2**

## EUROPEAN PATENT APPLICATION

(21) Application number: **92104271.9**

(22) Date of filing: **12.03.92**

(51) Int. Cl.⁵: **H01M 10/39, H01M 10/04**

Priority 120391 IT TO91000173.

(30) Priority: **12.03.91**

(43) Date of publication of application:
**16.09.92 Bulletin 92/38**

(84) Designated Contracting States:
**AT BE CH DE DK ES FR GB GR IT LI LU NL SE**

(71) Applicant: **GINATTA SOCIETA' PER AZIONI**
**Via Brofferio 1**
**I-10121 Torino(IT)**

(72) Inventor: **Rossetti, Furio**

Via Galimberti No. 47
**I-10082 Cuorgne' (TO)(IT)**
Inventor: **Richiardone, Walter**
**Via S.G. Cottolengo No. 31**
**I-10060 Pinasca (Pinerolo)(IT)**
Inventor: **Ginatta, Marco Vincenzo**
**Via Brofferio No. 3**
**I-10121 Torino(IT)**

(74) Representative: **Lotti, Giorgio**
**c/o Ing. Barzanò & Zanardo Milano S.p.A. Via**
**Cernaia 20**
**I-10122 Torino(IT)**

(54) **Hermetically sealed storage battery of lithium alloy/metal sulphide type with bipolar electrodes.**

(57) A storage battery of lithium alloy/metal sulphide type consists of one or more stacked cells, each of which consists of a cathode and an anode separated from each other by a ceramic separator which insulates the electrodes and supports the electrolyte, consisting of a mixture of fused salts of suitable composition. Each constituent cell of the battery is hermetically sealed. Two adjacent cells have for the two electrodes of opposite polarity a common current collector consisting of a metal plate welded to the cup containing the active electrode material. A perforated metal plate is interposed between the electrode separator and each of the two electrodes to retain the active material forming the electrodes.

FIG.3

This invention relates to storage batteries using the lithium alloy/metal sulphide system with bipolar electrodes.

The active cathode material is a metal sulphide or disulphide (such as FeS, feS$_2$, NiS, HiS$_2$ etc.) and the anode material is a lithium alloy (such as Li-Al, Li-Si, Li-B, Li-Al-Fe, Li-Al-Si). The electrode separator can be a mat of ceramic material (such as BN) or a layer of ceramic powder (such as Y$_2$O$_3$, BeO, AlN, MgO etc.).

The electrolyte is a mixture of alkaline halides (such as LiCl-KCl, LiF-LiCl-LiBr, LiCl-LiBr-KBr etc.) and is contained both in the separator and in the electrodes.

Lithium alloy/metal sulphide batteries can operate within a temperature range which depends on the type of metal sulphide used and the electrolyte composition, but lies between 370°C and 500°C. The electrode materials and electrolyte are very corrosive at the operating temperature, because of which the current collectors and the ceramic components have to be constructed of materials resistant to the corrosiveness of the electrode environments.

Lithium alloy/metal sulphide batteries produced up to the present time are of prismatic configuration and consist of electrodes composed of active material particles pressed together and enclosed in metal structures acting as current collectors, separated from each other by layers of particles or mats of ceramic material. The electrolyte fills the voids within these separators.

Several electrodes of the same polarity are connected together by welding, the terminal poles emerging from one cell being connected to the adjacent cell.

The main limitations of this configuration can be summarized as follows:

a) low specific battery energy compared with that theoretically obtainable because of the high content of inactive metal used for the rather complex current collector structures,

b) difficult to assemble,

c) high ohmic loss in the connections between the constituent cells of the battery.

A solution to these problems is to use a new cell and hence battery configuration, of bipolar electrode type.

The main problem relating to the lithium alloy/metal sulphide battery configuration is the sealing of the individual cells to prevent leakage of the electrolyte present in the liquid state at the operating temperature, and which could result in a considerable fall-off in the battery performance.

The limitations of previous bipolar battery prototypes lie precisely in the method of sealing the individual cells.

The objects of the present invention are:

- to provide a battery with a configuration such as to allow the formation of long-life sealed joints between the "cups" containing the electrode materials and the ceramic structure containing the separator and electrode.

In other words:

- to provide a system which enables the sealed joint to be obtained before introducing into the ceramic containing structure (eg. a magnesium oxide ring) the separator and the electrolyte supported by it, which would be unable to withstand the high temperature required to produce an adequate metal-ceramic joint,

- to provide a battery with a configuration which results in a low internal resistance by eliminating the intercell connections in which a large part of the ohmic loss occurs and which are inherent in traditional configurations; this configuration is produced by stacking cells which are connected together by sharing between adjacent cells the current collector of electrodes of opposite polarity (hence known as a bipolar current collector),

- to reduce the total battery weight by eliminating the external intercell connections and reduce the quantity of non-active metal used for the current collectors.

More specifically, the invention provides a bipolar electrode battery by stacking electrochemical lithium alloy/metal sulphide cells face to face and using the same flat-plate current collector for the two opposite-polarity electrodes pertaining to two adjacent cells, the collector hence being known as a bipolar current collector. The invention also provides a configuration for the individual cells such that each of them has the following characteristics:

- the active material of each electrode is contained within a structure formed by the bipolar current collector to which there is welded a metal cup the base of which has been removed except for a rim to act as a support for a perforated metal plate, the purpose of which is to retain particles (the particles forming the electrode),

- the separator and electrolyte are contained in a structure obtained by welding a ring or an analogous "laterally retaining" structure formed from a suitable ceramic material to the two structures containing the active electrode materials.

A further characteristic of the invention is that the weld between the ceramic structure and the metal cups is made before assembling the cell, ie when the cavity in the ceramic containing structure has not yet been filled with the separator and electrolyte, so that the temperature required to ensure the formation of an optimum metal-ceramic joint can be safely attained.

A non-limiting embodiment of the invention is described hereinafter with reference to the accompanying drawings, in which:

Figure 1 is a vertical section through the structure obtained by welding the ceramic structure for containing the separator and electrolyte to the two metal cups;

Figure 2 is a vertical section through an individual electrochemical cell;

Figure 3 is an exploded perspective view of an individual electrochemical cell;

Figure 4 is a vertical section through the battery without its temperature control systems.

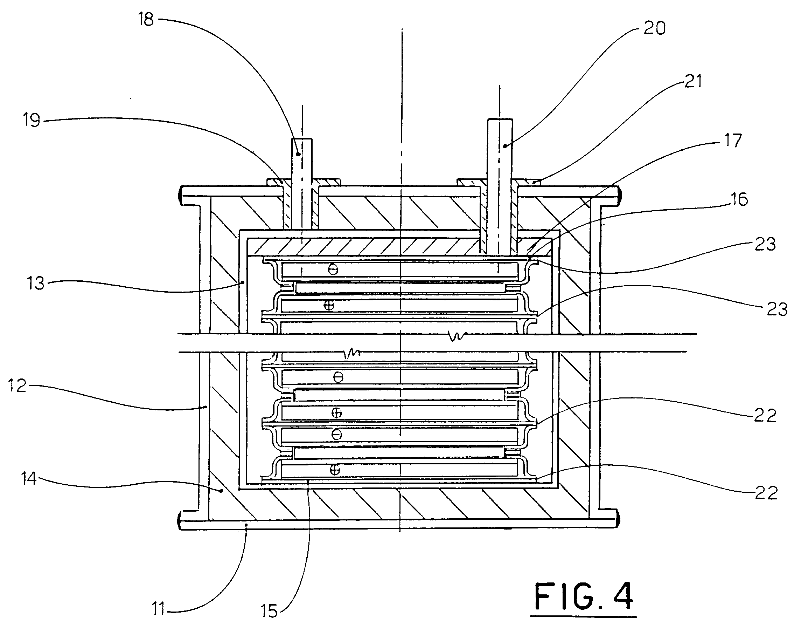

Figure 4 shows an outer container 11 formed from two metal walls 12 and 13 between which adequate thermal insulation 14 is interposed.

This container enables all the battery components to be housed. The stack of cells is located within the container 11.

The inner metal wall is connected to the monopolar current collector 15 of the positive electrode of the first cell 22 of the stack, the monopolar current collector 16 of the negative electrode of the last cell 23 of the stack being insulated electrically from the inner metal wall of the container 11 by a layer of insulating material 17.

The positive terminal 18 connected to the inner metal wall of the container is insulated electrically from the outer wall by the insulator 19, the negative terminal 20 connected to the monopolar collector 16 of the first cell of the stack being insulated from the two metal walls of the outer container 11 by the insulator 21.

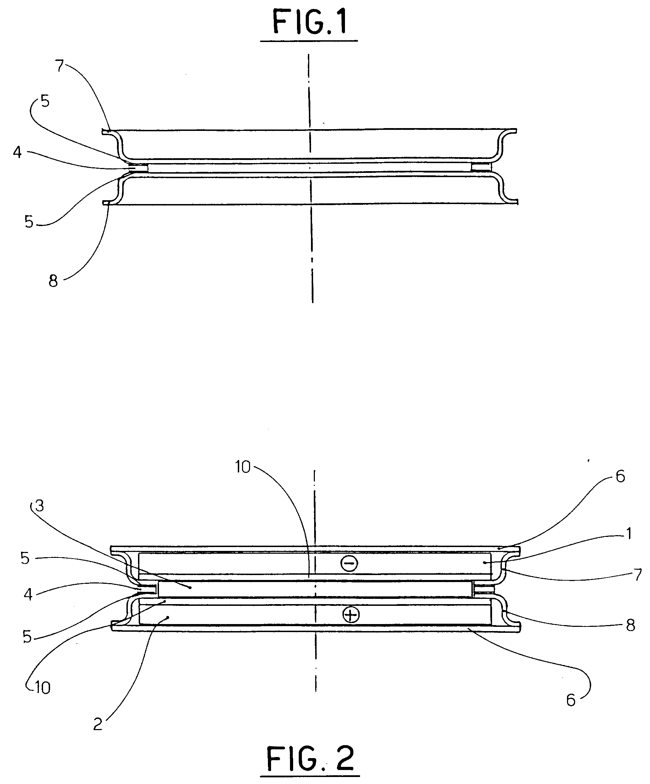

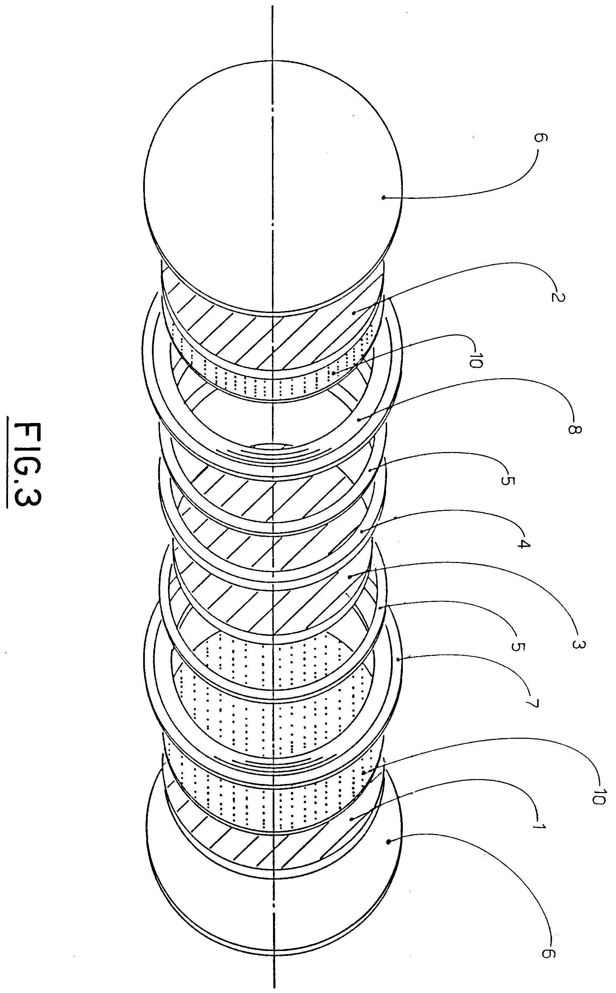

As can be seen in Figures 2 and 3, each constituent cell of the battery is formed from an anode 1 and a cathode 2 which are obtained by one of the methods used for preparing porous electrodes (for example by hot or cold pressing suitable mixtures of active material and electrolyte of suitable particle size). These electrodes are separated from each other by two perforated metal screens and by the electrode separator 3 containing the electrolyte (supported).

The perforation diameter and the percentage of open area of the metal screens 10 depend on the particle size of the powders used for the electrodes and the ionic conductivity which is to be achieved (hence also related to the type of electrolyte used).

The purpose of these screens is to prevent particle migration of the active electrode materials.

The electrode separator 3, the purpose of which is to prevent direct electrical contact between the two electrodes but without excessively hindering ionic flow between them, and also to create a further barrier against particle migration of active electrode material, can be a ceramic mat or a bed of ceramic particles, the voids of which are filled with the electrolyte (for example a disc obtained by cold or hot pressing a mixture of ceramic particles and electrolyte can be used).

The electrodes 1 and 2 and the separator 3 (with the electrolyte) are housed in a structure, shown in Figure 1, formed by sealedly joining the two bottomless metal cups 7 and 8 to a ceramic ring (containing structure for the separator and electrolyte) 4 acting as a spacer and electrical insulator.

The metal-ceramic joint can be made by brazing using a suitable metal brazing alloy, or by using a suitable welding glass.

A cell is assembled by inserting the disc 3 comprising the separator and electrolyte into the structure shown in Figure 1 and positioning it within the ceramic ring 4, after which the two perforated screens 10 are positioned one on each side, then finally inserting the positive disc 2 and negative disc 1 of electrode material.

After these operations, that edge of the cup enclosing the electrode of opposite polarity to the upper electrode of the last assembled cell of the stack is placed on the disc-shaped metal conductor 6 forming the upper current collector of this latter cell and is welded to it.

The metal conductor 6 acting as the current collector therefore separates the opposite-polarity electrodes of the last two assembled (and hence adjacent) cells, to hence form a bipolar electrode.

A new disc-shaped current collector is then placed on the edge of the cup and is welded after placing the next cell on this disc.

Although the thus assembled cells forming the stack are sealed separately from each other, they have the current collector of the two opposite-pole electrodes in common.

The passage of electric current between one cell and another takes place in a direction perpendicular to the surface of the bipolar current collector without having to use any intermediate collector.

Compared with other possible designs for a hermetically sealed bipolar lithium alloy/metal sulphide battery configuration, the present invention enables separator discs already containing the electrolyte and prepared by hot or cold pressing mixtures of ceramic powder and electrolyte to be used, so avoiding the need to introduce the electrolyte in the fused state after preassembling the separator, with the resultant problems of electrolyte infiltration.

This is made possible by the use of movable particle retainers 10 instead of cups with a grid-type base, hence allowing the metal-ceramic welding to be effected at the necessary temperature, not withstandable by the electrolyte, before assembling the separator/electrolyte module.

In this respect, if cups are used with their base not removed but instead perforated (in grid formation), the metal-ceramic welds would have to be made with the separator already positioned, so that separators already saturated with electrolyte could not be used as the electrolyte would degrade at the temperature required for forming the joint, because of which the electrolyte would have to be loaded later by infiltration.

The metals used for forming the various cell components vary according to the lithium alloy used and whether a metal sulphide or disulphide is used.

Considering for example a Li-AlFeS$_2$ battery, the anode-containing cup can be of low carbon steel or stainless steel, and the cathode-containing cup and bipolar electrode current collectors can be of molybdenum.

The operating voltage of the battery according to the present invention is unlimited, as the configuration used allows n bipolar electrodes to be inserted and hence n + 1 cells to be stacked to attain the desired value.

## Claims

1.  A hermetically sealed bipolar storage battery of lithium alloy/metal sulphide type, characterised in that two adjacent electrochemical cells have a common current collector which separates the electrodes of opposite pole pertaining one to one cell and the other to the adjacent cell; each electrochemical cell consisting of two opposite-polarity electrodes contained in two bottomless metal cups and separated by a central separator containing the electrolyte; this latter, which is in the liquid state at the battery operating temperature, being contained within a ceramic structure welded to the two metal cups.

2.  A battery as claimed in claim 1, characterised in that a perforated metal screen for retaining particles is interposed between each electrode and the ceramic separator.

3.  A battery as claimed in claim 1, characterised in that the individual electrochemical cells are piled to form a stack; the stack formed from the constituent cells of the battery being enclosed in a container consisting of two metal walls between which a layer of insulating material is interposed.

4.  A battery as claimed in claim 1, characterised in that the positive terminal is insulated from the outer metal wall of the container but is connected to the inner wall, which is itself connected to the monopolar collector of the positive electrode of the first cell of the stack.

5.  A battery as claimed in claim 1, characterised in that the negative terminal is insulated from both metal walls of the container but is connected to the monopolar collector of the negative electrode of the last cell of the stack.

6.  A battery as claimed in claim 1, characterised in that two constituent adjacent cells with common current collectors are individually sealed.

7.  A battery as claimed in claim 1, characterised in that the active electrode materials and the separator/electrolyte module of each cell are contained in a structure formed by joining (metal-ceramic joint) two metal cups, from which the base has been removed, to a stable ceramic ring by welding using a suitable interposed material.

8.  A battery as claimed in claim 7, characterised in that metal discs acting as current collectors are welded to said structure after introducing the separator/electrolyte module, the perforated screens and the electrodes.

9.  A battery as claimed in claim 1, characterised in that the perforated screens acting as particle retainers are movable and enable the separator/electrolyte module to be assembled later, after the metal-ceramic joints have been made.

10. A battery as claimed in claim 1, characterised by consisting of a number n of electrodes in series, and hence n + 1 cells, to achieve the desired voltage.

# FIG.1

# FIG. 2

**FIG.3**

FIG. 4